Europäisches Patentamt

European Patent Office

Office européen des brevets

(19)

(11) Publication number: **0 088 489**
**B1**

(12) **EUROPEAN PATENT SPECIFICATION**

(45) Date of publication of patent specification: **28.05.86**

(51) Int. Cl.⁴: **F 16 G 11/00**

(21) Application number: **83300249.6**

(22) Date of filing: **19.01.83**

(54) Ferrule attachment.

(30) Priority: **27.01.82 GB 8202367**
**04.02.82 GB 8203276**

(43) Date of publication of application:
**14.09.83 Bulletin 83/37**

(45) Publication of the grant of the patent:
**28.05.86 Bulletin 86/22**

(84) Designated Contracting States:
**DE GB IT**

(56) References cited:
**CH-A- 34 036**
**DE-A-2 823 018**
**DE-C- 895 082**
**DE-U-1 710 204**
**DE-U-7 026 795**
**US-A-2 077 222**
**US-A-2 278 717**
**US-A-2 863 198**

**Soviet Inventions Illustrated, Week E 15, 26**
**May 1982, Section Q 64**

(73) Proprietor: **BRITAX (WINGARD) LIMITED**
**Chandler Road**
**Chichester West Sussex PO19 2UG (GB)**

(72) Inventor: **Setters, Frederick John**
**120 Brook Gardens**
**Emsworth Hampshire (GB)**

(74) Representative: **Hollinghurst, Antony**
**Britax Division (Patents) Kingsham Road**
**Chichester West Sussex PO19 2UG (GB)**

Courier Press, Leamington Spa, England.

## Description

This invention relates to a ferrule for making a secure connection to a cable for supporting a safety belt buckle.

DE—A—2823018 discloses a ferrule for making a secure connection to a cable for supporting a safety belt buckle comprising a tubular body for receiving the cable which is secured to the tubular body by crimping the latter to grip the cable and which forms a U-shaped loop in the final state.

According to the invention, the U-shaped loop is formed in the cable and inserted into one end of the tubular body which is then crimped to grip the cable and hold the projecting ends thereof at a required orientation.

Preferably, the tubular body has a pair of aligned transverse holes extending through the walls thereof, the cable being inserted into the tubular body to beyond the holes so as to surround a member inserted therethrough.

Alternatively, the tubular body may be cut away on one side at the end opposite to that from which the cable is inserted, a single hole being provided on the other side of the body, in alignment with the cut-away portion.

In one form of the invention which is particularly applicable to securing the cable to an anchorage which is to be attached to the floor of a motor vehicle, the tubular body is bent at a location between the holes and the end from which the cable projects, so that the cable is held at an acute angle to the plane perpendicular to the axis of the holes.

An embodiment of the invention will now be described by way of example, with reference to the accompanying drawings, in which:

Figure 1 is a transverse cross-sectional view of a ferrule attachment in accordance with the invention, for securing a cable to an anchorage for attachment to the floor of a motor car,

Figure 2 is a cross-sectional view taken on the line 2—2 in Figure 1,

Figure 3 is a cross-sectional view taken on the line 3—3 in Figure 1,

Figure 4 is a perspective view of another embodiment of the invention, and

Figure 5 is a perspective view of a further embodiment of the invention.

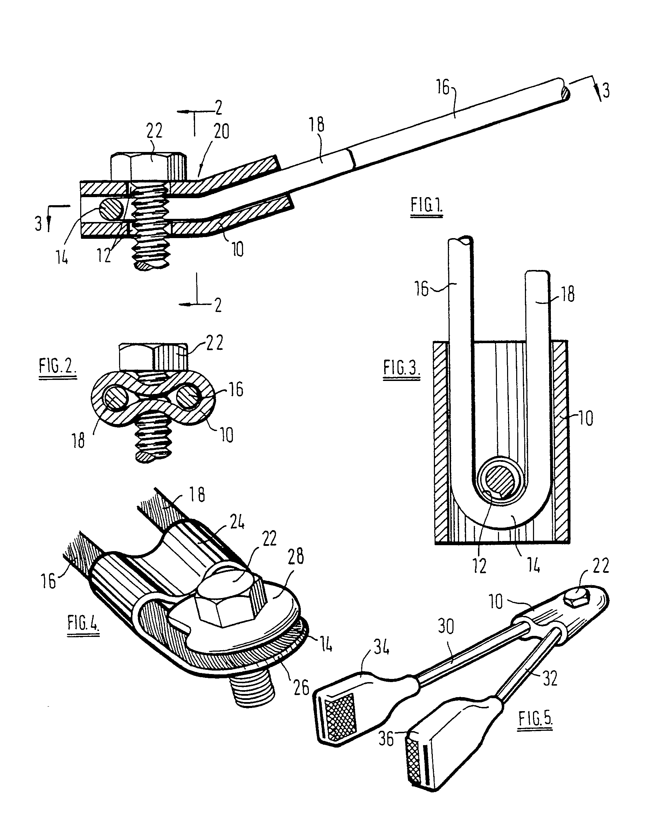

The body 10 has a pair of aligned holes 12 extending transversely therethrough. A U-shaped loop is formed in a cable 14 and inserted into one end of the tubular body 10 to beyond the holes 12 so that the limbs (projecting ends) 16 and 18 of the U-shape project from the end of the tubular body from which the loop was inserted. The tubular body is then crimped in a direction perpendicular to the plane containing both limbs 16 and 18 of the U-shape so as to grip the cable 14, as can best be seen in Figure 2. At the same time, the tubular body 10 is bent at 20 so that the projecting limbs 16 and 18 of the U-shape are angled upwards relative to the plane perpendicular to the axis of the holes 12. In use, the attachment is secured to the floor or top of the transmission tunnel of a motor car, for example by means of a bolt (member) 22 projecting through the holes 12, with the limb 16 angled upwards so that a buckle (not shown) on the free end thereof is supported in a conveniently accessible position relative to the vehicle seat.

Figure 4 shows an alternative embodiment in which the cable 14 is retained in a tubular body 24 having a cut-away zone on one side of the end 26 opposite to that from which the limbs 16 and 18 of the U-shaped loop project. The bolt 22 projects through a washer 28 which lies in the cut-away zone, then between the limbs 16 and 18 of the U-shape and then through a hole, similar to the holes 12, in the other side of the end 26.

In both of the embodiments described above, the limb 18 is shown as terminating a short distance beyond the adjacent end of the tubular member 10. Figure 5 shows a further embodiment having two limbs 30 and 32 of equal length and each supporting a respective buckle 34, 36 so that the two buckles for adjacent front seats are secured by the same ferrule attachment.

A ferrule attachment in accordance with the invention may also be used to secure a buckle to the free end of a cable such as the cable 14.

## Claims

1. A ferrule for making a secure connection to a cable (14) for supporting a safety belt buckle comprising a tubular body (10) for receiving the cable (14) which is secured to the tubular body (10) by crimping the latter to grip the cable (14) and which forms an U-shaped loop in the final state, characterised in that the U-shaped loop is formed in the cable and inserted into one end of the tubular body (10) which is then crimped to grip the cable (14) and hold the projecting ends (16, 18) thereof at a required orientation.

2. A ferrule according to claim 1, characterised in that the tubular body (10) has a pair of aligned transverse holes (12) extending through the walls thereof, the cable (14) being inserted into the tubular body (10) to beyond the holes (12) so as to surround the member (22) inserted therethrough.

3. A ferrule according to claim 1, characterised in that the tubular body (24) is cut away on one side at the end (26) opposite to that from which the cable (14) is inserted, a single hole being provided on the other side of the body (24), in alignment with the cut-away portion.

4. A ferrule according to claim 1, 2 or 3, characterised in that the tubular body (10) is bent at a location (20) between the hole (12) and the end from which the cable (14) projects, so that the cable (14) is held at an acute angle to the plane perpendicular to the axis of the hole (12).

5. A ferrule according to any preceding claim, characterised in that a respective buckle (34, 36) is connected to each end (30, 32) of the cable.

## Revendications

1. Ferrure pour raccordement solide à un câble (14) de support d'une boucle de ceinture de sécurité comprenant un corps tubulaire (10) destiné à recevoir le câble (14) que l'on fixe au corps tubulaire (10) en sertissant ce dernier pour agripper le câble (14) et qui forme à l'état final une boucle en U, caractérisée en ce que la boucle en U est formée dans le câble et est insérée dans une extrémité du corps tubulaire (10) qui est ensuite serti pour agripper le câble (14) et retenir ses extrémités dépassantes (16, 18) selon l'orientation désirée.

2. Ferrure selon la revendication 1, caractérisée en ce que le corps tubulaire (10) présente deux trous transversaux alignés (12) traversant ses parois, le câble (14) étant inséré dans le corps tubulaire (10) jusqu'au-delà des trous (12) de façon à entourer un élément (22) inséré dans ceux-ci.

3. Ferrure selon la revendication 1, caractérisée en ce que le corps tubulaire (24) est échancré d'un côté à l'extrémité (26) opposée à celle par laquelle on insère le câble (14), un seul trou étant ménagé de l'autre côté du corps (24), en regard de l'échancrure.

4. Ferrure selon l'une quelconque des revendications 1 à 3, caractérisée en ce que le corps tubulaire (10) est coudé en un endroit (20) situé entre le trou (12) et l'extrémité d'où dépasse le câble (14), de sorte que le câble (14) est maintenu à angle aigu sur le plan perpendiculaire à l'axe du trou (12).

5. Ferrure selon l'une quelconque des revendications 1 à 4, caractérisée en ce qu'une boucle respective (34, 36) est reliée à chaque extrémité (30, 32) du câble.

**Patentansprüche**

1. Seilschloß zur Herstellung einer sicheren Verbindung mit einem Seil (14) zum Halten einer Sicherheitsgurt-Schließe, umfassend einen rohrförmigen Körper (10) zum Aufnehmen des Seiles (14), das am rohrförmigen Körper (10) durch Quetschen des Körpers (10) zum Fassen des Seiles (14) gehalten ist und das im Endzustand eine U-förmige Schlaufe bildet, dadurch gekennzeichnet, daß die U-förmige Schlaufe im Kabel geformt wird und in ein Ende des rohrförmigen Körpers (10) eingeschoben wird, das dann gequetscht wird um das Seil (14) zu fassen und dessen hervorstehende Enden (16, 18) in der benötigten Orientierung zu halten.

2. Seilschloß nach Anspruch 1, dadurch gekennzeichnet, daß der rohrförmige Körper (10) ein Paar von fluchtenden durchgängigen Löchern (12) aufweist, welche durch seine Wände hindurchführen, wobei das Seil (14) in den rohrförmigen Körper (10) bis über die Löcher (12) hinaus eingeführt wird, so daß es das Teil (22), das hindurchgesteckt ist, umläuft.

3. Seilschloß nach Anspruch 1, dadurch gekennzeichnet, daß der rohrförmige Körper (24) an einer Seite am Ende (26) gegenüber demjenigen Ende, in welches das Seil (14) hineingesteckt wird, abgeschnitten ist, wobei ein einziges Loch in der anderen Seite des Körpers (24) in Flucht mit dem abgeschnittenen Abschnitt vorgesehen ist.

4. Seilschloß nach einem der Ansprüche 1, 2 oder 3, dadurch gekennzeichnet, daß der rohrförmige Körper (10) an einer Stelle (20) zwischen dem Loch (12) und dem Ende, aus dem das Seil (14) hervorsteht, derart gebogen ist, daß das Seil (14) in einem spitzen Winkel zur Ebene rechtwinklig zur Achse des Loches (12) gehalten ist.

5. Seilschloß nach einem der vorhergehenden Ansprüche, dadurch gekennzeichnet, daß jeweils eine Schließe (34, 36) mit einem Ende (30, 32) des Seiles verbunden ist.

**0 088 489**

FIG.1.

FIG.2.

FIG.3.

FIG.4.

FIG.5.